# EUROPÄISCHE PATENTSCHRIFT

(11) **EP 1 963 163 B1**
(45) Veröffentlichungstag und Bekanntmachung des Hinweises auf die Patenterteilung: **10.06.2009**
(21) Anmeldenummer: 06841037.2
(22) Anmeldetag: 19.12.2006
(51) Int. Cl.: B62D 1/06

(54) **LENKRAD**
STEERING WHEEL
VOLANT

(30) Priorität: 21.12.2005 DE 102005061697
(43) Veröffentlichungstag der Anmeldung: 03.09.2008
(73) Patentinhaber: Autoliv Development AB, 447 83 Vargarda (SE)
(72) Erfinder: VALENTINE, Jacques, 86190 Chire en Montreuil (FR); RICOU, Michel, 86600 Lusinan (FR)
(74) Vertreter: Stornebel, Kai
(86) Internationale Anmeldenummer: PCT/EP2006/012231
(87) Internationale Veröffentlichungsnummer: WO 2007/079933

(56) Entgegenhaltungen:
- EP-A- 1 602 549
- GB-A- 1 398 685
- JP-A- 2003 095 115
- US-A- 5 243 877

## Beschreibung

Die Erfindung betrifft ein Lenkrad mit einem formstabilen Grundkörper, der an einer Lenksäule eines Kfz befestigbar ist und einen Griffbereich aufweist, an dem ein Kunststoffansatz befestigt ist.

Aus der DE 28 17 284 A1 ist ein mehrteiliges Lenkrad eines Kraftfahrzeuges bekannt, bei dem ein Griffkörper, der mit einem Nabenbereich zur Befestigung an einer Längssäule verbunden ist, aus zwei miteinander verbundenen Elementen mit einem halbkreisförmigen Querschnitt hergestellt ist. Die Verbindung der beiden Elemente erfolgt formschlüssig über Klipselemente. Nachteilig daran ist ein fühlbarer Übergang an der Stoßkante der beiden Elemente sowie eine aufwendige Montage des Griffkörpers an dem Nabenbereich.

Aus der US 2002/0062712 A1 ist ein Verfahren zur Herstellung eines Lenkrades in Kraftfahrzeuges sowie ein Kraftfahrzeuglenkrad bekannt, bei dem ein Griffring aus Metall, der über Speichen mit einer Nabe verbunden ist, mit einer Zwischenschicht beklebt und anschließend mit Leder überzogen wird. Alternativ dazu ist es vorgesehen, dass die Zwischenschicht vorab mit dem Leder verbunden, insbesondere beklebt wird und anschließend das zweischichtige, flexible Material an dem Griffring des Lenkrades angeklebt wird.
Aus der EP 1602549 A1 ist ein Lenkrad nach dem Oberbegriff des Anspruchs 1 bekannt.

Ziel bei der Herstellung von Lenkrädern ist es, die Kosten sowohl bei der Herstellung als auch bei der Montage zu verringern, wobei die Festigkeitsanforderungen erfüllt und der notwendige Bauraum für Zusatzkomponenten erhalten werden sollen. Dazu ist es erforderlich, ein weniger komplexes Design und eine reduzierte Anzahl von Teilen vorzusehen. Eine solche Ausgestaltung ist auch im Hinblick auf eine demontagegerechte Konstruktion und auf ein erleichtertes Recycling hilfreich.

Neben den oben beschriebenen Lenkrädern und Herstellverfahren ist es aus dem Stand der Technik bekannt, dass ein Grundkörper, beispielsweise aus Magnesium oder Aluminium, mit einem äußeren Griffring und Speichen zur Befestigung einer Nabe mit einem Kunststoffschaum oder einem Kunststoffüberzug versehen wird, wobei der Kunststoffüberzug, vorzugsweise aus Polyurethan, unmittelbar an dem Griffring angeformt wird, beispielsweise indem der Griffring mit dem Kunststoff umspritzt wird. Eine zweite schützende oder dekorative Schicht aus Kunststoff oder Leder wird über diese Polyurethan-Trägerschicht gewickelt oder geklebt. Dieses Verfahren ist energieaufwendig und benötigt einen hohen Handarbeitsanteil, so dass das Lenkrad sehr teuer wird. Darüber hinaus ist die Polyurethanschicht schwer von dem Grundkörper zu entfernen, so dass ein Recycling schwierig und teuer ist.

Aufgabe der vorliegenden Erfindung ist es, ein Lenkrad bereitzustellen, das weniger kostenintensiv ist und eine leichtere Demontage und Recyclebarkeit gewährleistet.

Erfindungsgemäß wird diese Aufgabe durch ein Lenkrad mit den Merkmalen des Anspruchs 1. Vorteilhafte Ausgestaltungen und Weiterbildungen der Erfindung sind in den Unteransprüchen beschrieben.

Das erfindungsgemäße Lenkrad aus einem formstabilen Grundkörper, der an einer Lenksäule eines Kraftfahrzeuges befestigbar ist und einen ringförmigen oder ringähnlichen Griffbereich aufweist, an dem ein Kunststoffansatz befestigt ist, sieht vor, dass der Kunststoffansatz als ein separates Bauteil ausgebildet ist, das über Befestigungselemente mechanisch an dem Grundkörper festgelegt ist und die Kontur des Griffbereiches zu einem im Wesentlichen geschlossenen, kreisförmigen oder ovalen Querschnitt ergänzt. Durch die mechanische Festlegung eines separaten Kunststoffansatzsbauteiles, das bevorzugt einstückig ausgeführt ist und im Wesentlichen die Querschnittskontur des Griffbereiches ergänzt oder komplettiert, kann eine leichte Montage ebenso wie eine leichte Demontage unter Stofftrennung der verwendeten Materialien bewirkt werden. Dadurch ist es nicht mehr notwendig, den Grundkörper in eine Spritzgussform einzulegen und diesen vollständig oder teilweise mit einem Kunststoffmaterial zu umspritzen und dann anschließend mit einer weiteren Umhüllung zur Bereitstellung einer angenehmen Haptik zu versehen. Neben einer einstückigen Ausgestaltung des Kunststoffansatzes kann dieser auch aus mehreren Einzelteilen bestehen, dies ist insbesondere dann angezeigt, wenn der Griffbereich nicht als ein umlaufender Ring oder ringähnlicher Körper ausgebildet ist. Bevorzugt wird die Kontur der Griffbereiches der Grundkörpers zu einem Kreis oder Oval ergänzt.

Um eine möglichst sichere Festlegung des Kunststoffansatzes an dem Grundkörper zu ermöglichen, ist eine Aufnahmenut für den Grundkörper in dem Kunststoffansatz vorgesehen. Die Aufnahmenut folgt der Kontur des Grundkörpers oder des Griffabschnittes des Grundkörpers, so dass eine radiale Verlagerung des Kunststoffansatzes durch eine formschlüssige Festlegung unterbleibt. Die Festlegung des Kunststoffansatzes über die Befestigungselemente muss dann nur noch sicherstellen, dass eine Kraft entgegen der Einführrichtung des Grundkörpers in den Kunststoffansatz aufgenommen wird. Alternativ sind an dem Kunststuffansatz Formschlusselemente ausgebildet, die in den Grundkörper eingreifen und von diesem aufgenommen werden. Der Querschnitt des Grundkörpers kann U-förmig ausgebildet sein, so dass sich die Formschlusselemente in den Querschnitt erstrecken. An dem Kunststoffansatz kann eine Schulter ausgebildet sein, die eine exakte Zuordnung zum Grundkörper gewährleistet.

Der Kunststoffansatz kann halbringförmig im Querschnitt ausgebildet sein, so dass eine leichte Montage beispielsweise durch Einlegen des Grundkörpers in den Kunststoffansatz erfolgen kann. Alternativ kann der Grundkörper mit einer Querschnittsform ausgestattet sein, die ein Einlegen des Kunststoffansatzes und eine formschlüssige Festlegung ermöglichen.

Der Grundkörper weist erfindungsgemäß Speichen auf, die den äußeren Griffkörper mit einer Nabe verbinden. Der Grundkörper kann einstückig ausgebildet sein. Erfindungsgemäß ist der Kunststoffansatz über die Befestigungselemente an den Speichen festgelegt.

Dazu sind erfindungsgemäß Aufnahmeeinrichtungen integral an dem Kunststoffansatz angeformt, in die die Befestigungselemente eingreifen, so dass, beispielsweise über eine Klipsverbindung, die Befestigungselemente den Kunststoffansatz an dem Grundkörper festlegen.

Die Aufnahmeeinrichtungen greifen die Speichen zwischen dem Griffkörper und der Nabe um so dass auch ein Verdrehen des Kunststoffansatzes in Umfangsrichtung bei einer kreisförmigen Ausgestaltung des Grundkörpers nicht möglich ist.

Eine Weiterbildung der Erfindung sieht vor, dass in dem Kunststoffansatz eine Ausnehmung zur Aufnahme eines Montageelementes ausgebildet ist. Bei einer weiteren Ummantelung bzw. Umwicklung des Grundkörpers und des Kunststoffansatzes mit einem Polsterüberzug oder einem dekorativen Überzug aus einem anderen Material kann dieser Überzug in die Ausnehmung eingeführt werden und darin über das Montageelement, beispielsweise einen Montagering, eingeklemmt werden. Der entsprechende Überzugzuschnitt wird dabei lediglich um den Grundkörper und die darin festgelegte Ummantelung herumgelegt. Die Enden werden in die Ausnehmung eingeführt und anschließend durch das Einführen des Montageringes oder des Montagelementes festgelegt.

Der Grundkörper kann gegossen oder spritzgegossen sein und kann bevorzugt aus einem metallischen Werkstoff, insbesondere einer Leichtmetalllegierung oder einem Leichtmetall bestehen. Die Befestigungselemente sind bevorzugt als Formschlusselemente in Gestalt von Kunststoffkappen oder dergleichen ausgebildet. Alternativ zu einer integralen Ausgestaltung der Aufnahmeeinrichtungen für die Befestigungselemente können diese auch separat an dem Kunststoffansatz angeordnet bzw. befestigt sein. Der Kunststoffansatz sieht nicht ein vollständiges Umschließen des Grundkörpers vor, vielmehr wird eine Fügung des Grundkörpers und des Kunststoffansatzes in einer geradlinigen Montagerichtung erfolgen, so dass ein Bereich des Grundkörpers von dem Kunststoffansatz unbedeckt bleibt.

Nachfolgend wird die Erfindung anhand der beigefügten Figur näher erläutert. Es zeigen:
- Figur 1 -: eine Teilezeichnung eines Lenkrades;
- Figur 2 -: ein teilmontiertes Lenkrad;
- Figur 3 -: ein montiertes Lenkrad ohne Dekorationsüberzug;
- Figuren 4a und 4b -: eine Lenkrad mit Dekorationsüberzug in Draufsicht und Druntersicht;
- Figur 5 -: ein Querschnitt eines fertig montierten Lenkrades.
- Figur 6 -: eine Schnittdarstellung B-B des Lenkrades aus Fig. 5; sowie
- Figur 7-: eine vergrößerte Teildarstellung des rechten Abschnitts des Lenkrades aus Figur 2.

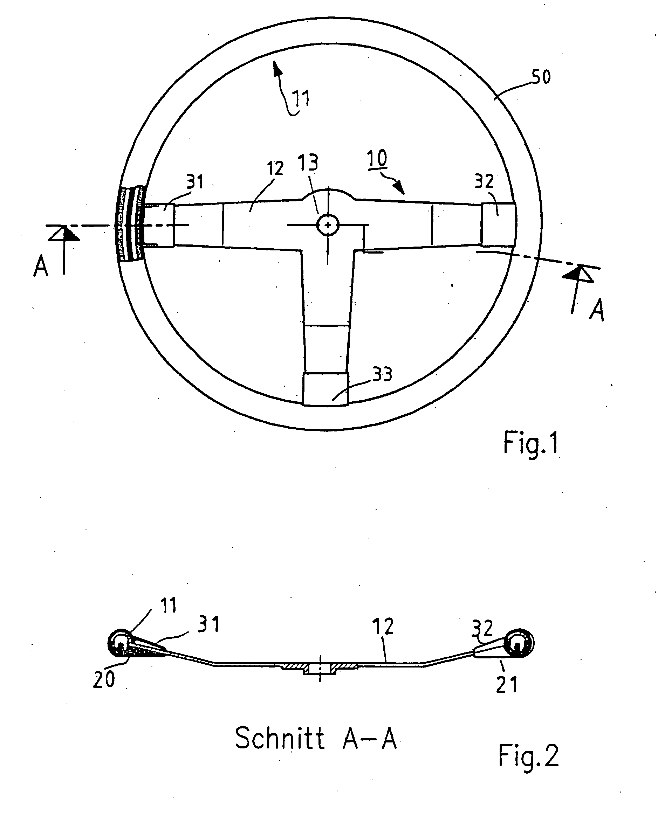

In der Figur 1 ist ein formstabiler Grundkörper 10 eines Lenkrades aus einer gegossenen Leichtmetalllegierung dargestellt. Der Grundkörper 10 weist einen ringförmigen Griffbereich 11 sowie davon nach innen abzweigende Speichen 12 auf, die den Griffbereich 11 mit einer Nabe verbinden. Der Grundkörper 10 wird über diese Nabe an einer nicht dargestellten Lenksäule festgelegt. In dem Grundkörper 10 können weitere Komponenten, wie Pralltopf, Airbag, Bedienungselemente und dergleichen, montiert werden.

Unterhalb des Grundkörpers 10 ist ein Kunststoffansatz 20 in Gestalt eines separat gefertigten Kunststoffringes angeordnet, an dem nach innen ragende Aufnahmeeinrichtungen 21 für die Speichen 12 vorgesehen sind. Die Aufnahmeeinrichtungen 21 sind so ausgebildet, dass die Speichen 12 darin aufgenommen werden können, so dass eine Verdrehung des Kunststoffringes 20 um den Grundkörper 10 in Umfangsrichtung verhindert wird. Eine Befestigung des Kunststoffansatzes 20 erfolgt über Befestigungselemente 31, 32, 33, die als separate Kunststoffbauteile in Gestalt von Kunststoffkappen ausgebildet sind. Diese umgreifen die Speichen 12 und treten in Eingriff mit den Aufnahmeeinrichtungen 21, so dass eine formschlüssige Festlegung über die Befestigungselemente 31, 32, 33 stattfindet.

Weiterhin ist ein Montageelement 40 gezeigt, das von unten, also von der dem Grundkörper 10 gegenüberliegenden Seite des Kunststoffansatzes 20 in eine in der Figur 1 nicht gezeigte Ausnehmung einführbar ist. Über das Montageelement 40, das hier als ein Montagering ausgebildet ist, kann ein Polster oder Dekorationsüberzug, der sowohl den Grundkörper 10 als auch den Kunststoffansatz 20 umspannt, an den miteinander verbundenen Komponenten 10, 20 festgelegt werden.

In der Figur 2 ist ein teilmontiertes Lenkrad gezeigt, bei dem der Grundkörper 10 bereits von oben auf den Kunststoffansatz 20 aufgelegt bzw. entsprechende Formschlusselemente des Kunststoffansatzes 20 von dem Grundkörper 10 aufgenommen wurden. Die Aufnahmeeinrichtungen 21 umfassen die Speichen 12. Der Kunststoffansatz 20 schließt dabei mit dem radialen Außenumfang des Grundkörpers 10 bzw. des Griffbereiches 11 bündig ab, so dass im montierten Zustand ein geschlossener, kontinuierlicher Querschnitt ohne Absätze oder fühlbare Fugen entsteht. Der Montagering 40 ist dabei noch nicht in den Kunststoffansatz 20 eingeführt.

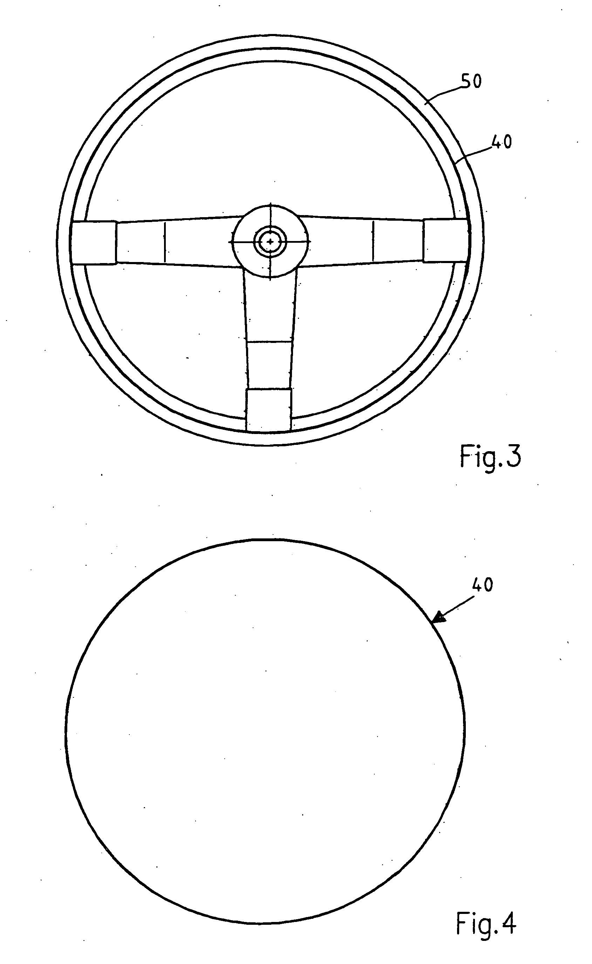

In der Figur 3 ist der Abschluss der Montage des Grundkörpers 10 an dem Kunststoffansatz 20 gezeigt, bei dem die Kunststoffkappen 31, 32, 33 die Speichen 12 umfassen und an den Aufnahmeeinrichtungen 21 angeklipst sind.

Zur endgültigen Montage wird um den Grundkörper 10 und den Kunststoffansatz 20 ein Überzug 50 um den Griffbereich und gegebenenfalls die Befestigungselemente 31, 32, 33 gelegt und in eine auf der dem Fahrer abgewandten Seite des Kunststoffansatzes 20 vorgesehene Ausnehmung 23 eingeführt. Gegebenenfalls kann eine Polsterlage 60 aus einem Schaumstoff unter dem dekorativen Überzug 50 vorgesehen sein, um die Haptik zu verbessern. Nach dem Einführen der Polsterlage 60 und dem dekorativen Leder- oder Kunststoffüberzug 50 in die Ausnehmung 23 wird der Montagering 40 in diese Ausnehmung 23 eingeführt und eine Festklemmung der Ummantelung bewirkt. Durch das Einführen des Montageringes 40 wird gleichzeitig die Ummantelung durch die Schichten 50, 60 um den Grundkörper 10 und den Kunststoffansatz 20 gespannt. Der Montagering 40 kann aus Kunststoff oder aus einem natürlichen Werkstoff, beispielsweise Leder ausgebildet sein. Ebenfalls ist es möglich, ein Lederband in die Ausnehmung 23 einzuführen.

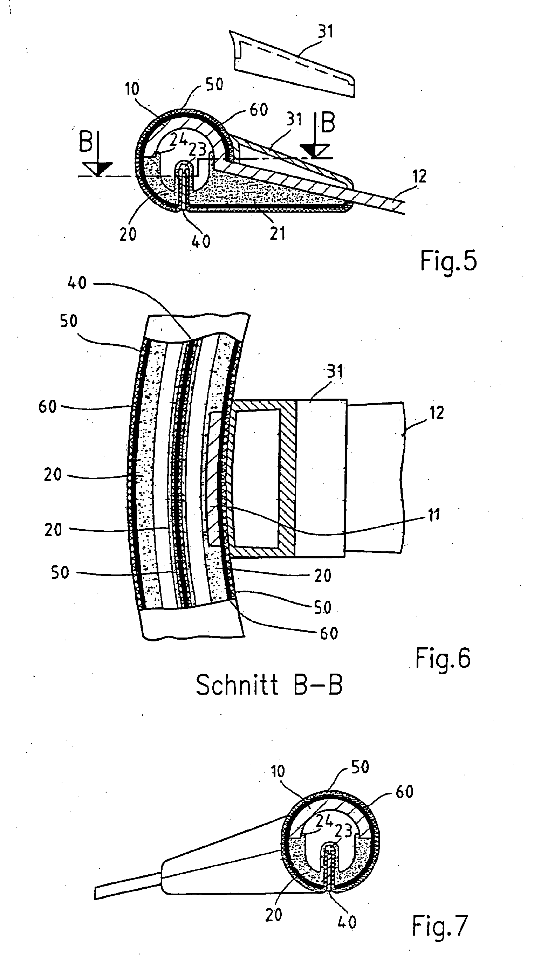

In der Figur 5 ist der Aufbau eines fertig montierten Lenkrades in Querschnittsdarstellung gezeigt. Der Grundkörper 10 und der Kunststoffansatz 20 bilden einen fugenlosen Übergang, wobei auf den Kunststoffansatz 20 einen halbkreisförmigen Querschnitt mit über die Fügungsfläche hinausragenden Fortsätzen 24 als Formschlusselemente aufweist, die zur radialen Fixierung des Grundkörpers 10 an dem Kunststoffansatz 20 dienen. Die Fortsätze 24 können eine Federkraft ausüben, so dass der Kunststoffansatz 20 festgeklemmt werden kann. Die Ausnehmung 23 ist einstückig in dem Kunststoffansatz 20, radial nach innen gerichtet in Schlitzform ausgebildet. Durch die rein mechanischen Fügeverrichtungen kann eine leichte Montage und Demontage der Komponenten aus unterschiedlichen Materialien stattfinden. Der Grundkörper 10 stellt dabei die Tragkonstruktion für die weiteren Komponenten zur Verfügung und gewährleistet eine ausreichende Stabilität. Der halbkreisförmige Querschnitt des Grundkörpers 10 wird durch den Kunststoffansatz 20 zu einem im Wesentlichen geschlossenen, kreisförmigen oder ovalen Querschnitt ergänzt, wobei die haptischen Bedürfnisse eines Fahrzeugnutzers durch die Polsterschicht 60 sowie die dekorative Schicht 50, beispielsweise aus einem weichen Kunststoff oder Leder, erfüllt werden.

Eine Demontage erfolgt durch Entfernen des Montageelementes 40 aus der Ausnehmung 23, einem einfachen Abziehen der Schichten 50 60 sowie aus einem Auseinandernehmen des metallischen Grundkörpers 10 und des Kunststoffansatzes 20.

Die dekorative Ummantelung 50 kann auch in den Aufnahmeeinrichtungen 21 des Kunststoffansatzes 20 fortgeführt werden. Dementsprechend wird in den Aufnahmeeinrichtungen 21 eine Ausnehmung vorgesehen, in der ein entsprechendes Montageelement einführbar ist. Die Ausnehmung verläuft dann im Wesentlichen radial nach innen in Richtung Nabe.

In der Figur 6 ist ein Schnitt gemäß B-B in der Figur 5 gezeigt, aus dem sich der Aufbau des fertig montierten Lenkrades gut erkennen lässt. An den Grundkörpern mit den radial nach außen ragenden Speichen schließt sich der ringförmige Griffbereich 11 an, der ein Teil des formstabilen Grundkörpers 10 ist. Das Befestigungselement 31 ist auf der Speiche 12 und der nicht zu erkennenden Aufnahmeeinrichtung 21 mechanisch stabil festgelegt, insbesondere formschlüssig verclipst. Der Grundkörper 10 an seinem Griffbereich 11 sowie gegebenenfalls teilweise unterhalb der Aufnahmeeinrichtungen 21 ist mit einer Polsterschicht 60, bevorzugt aus Schaumstoff und einer abschließenden dekorativen Schicht 50, beispielsweise aus Leder, überzogen, wobei diese Polsterschichten 50, 60 durch den Montagering 40, der in der Ausnehmung 23 zwischen den Endbereichen der Polsterschichten 50, 60 eingeführt ist, festgeklemmt sind. Die Ringform sowohl des Montageelementes 40 als auch des Griffbereiches 11 ist durch die beispielhafte Formgestaltung des Lenkrades bedingt, bei anderen Gestaltungsvorgaben ist eine andere Form vorgesehen und möglich. Auch sind offene Querschnitte realisierbar.

In der Figur 7 ist in einer vergrößerten Teildarstellung der rechte Abschnitt der Figur 2 vergrößert dargestellt. Hier ist deutlich die halbkreisförmige, offene Ausgestaltung sowohl des Grundkörpers 10 im Griffbereich als auch des Kunststoffansatzes 20 zu erkennen. Die Ausnehmung 23 als Freiraum ist durch den dekorativen Überzug 50 und den Montagering 40 überwiegend ausgefüllt. In der dargestellten Ausführungsform ist der Polsterüberzug 60 als Unterlage für den dekorativen Überzug 50 nicht in der Ausnehmung 23 eingeklemmt, dies kann in einer alternativen Ausgestaltung vorgesehen sein. Die Fortsätze 24, die einstückig mit dem Kunststoffansatz 20 ausgebildet sind, legen den Kunststoffansatz 20 eindeutig an den Grundkörper 10 fest. Neben den Befestigungselementen 31, 32, 33 wird der Kunststoffansatz 20 durch die Überzüge 50, 60, die unter Spannung um den Grundkörper 10 und den Kunststoffansatz 20 gelegt und in dem Kunststoffansatz 20 eingeklemmt sind, gehalten.

## Patentansprüche

1. Lenkrad mit einem formstabilen Grundkörper (10), der an einer Lenksäulen eines Kraftfahrzeuges befestigbar ist und einen Griffbereich (11) aufweist, an dem ein Kunststoffansatz (20) befestigt ist, wobei der Griffbereich (11) ringförmig oder ringähnlich ausgebildet und der Kunststoffansatz (20) als separates Teil ausgebildet ist, das über Befestigungselemente (31,32,33) mechanisch an dem Grundkörper (10) festgelegt ist und die Kontur des Grifibereichquerschnittszu einem im Wesentlichen geschlossenen, kreisförmigen oder ovalen Querschnitt ergänzt, **dadurch gekennzeichnet, dass** die Befestigungselemente (31, 32, 33) als separate Kunststoffkappen ausgebildet sind, die Speichen (12), die von dem Griffbereich zu einer Nabe führen, umgreifen und in Aufnahmeeinrichtungen (21), die an dem Kunststoffansatz (20) integral angeformt sind, eingreifen und den Kunststoffansatz (20) formschlüssig an den Speichen (12) festlegen.

2. Lenkrad nach Anspruch 1, **dadurch gekennzeichnet, dass** der Kunststoffansatz (20) eine Aufnahmenut oder Formschlusselemente (24) für den Grundkörper (10) aufweist.

3. Lenkrad nach Anspruch 1 oder 2, **dadurch gekennzeichnet, dass** der Kunststoffansatz (20) halbringförmig ausgebildet ist.

4. Lenkrad nach einem der voranstehenden Ansprüche, **dadurch gekennzeichnet, dass** der Grundkörper (10) Speichen (12) aufweist, die den äußeren Griffbereich (11) mit einer Nabe verbinden und der Kunststoffansatz (20) an den Speichen (12) festgelegt ist.

5. Lenkrad nach einem der voranstehenden Ansprüche, **dadurch gekennzeichnet, dass** in dem Kunststoffansatz (20) eine Ausnehmung (23) zur Aufnahme eines Montageelementes (40) ausgebildet ist.

6. Lenkrad nach Anspruch 5, **dadurch gekennzeichnet, dass** der Grundkörper (10) und der Kunststoffansatz (20) von einem Polster- und/oder Dekorationsüberzug (50, 60) umspannt sind, der in der Ausnehmung (23) eingeführt und darin durch das Montageelement (40) eingeklemmt ist.

7. Lenkrad nach einem der voranstehenden Ansprüche, **dadurch gekennzeichnet, dass** der Grundkörper (10) gegossen oder spritzgegossen ist.

8. Lenkrad nach einem der voranstehenden Ansprüche, **dadurch gekennzeichnet, dass** der Grundkörper (10) aus einem metallischen Werkstoff, insbesondere einem Leichtmetall oder einer Leichtmetalllegierung hergestellt ist.

## Claims

1. Steering wheel with a dimensionally stable basic body (10) which can be fastened to a steering column of a motor vehicle and has a gripping region (11) to which a plastic attachment (20) is fastened, wherein the gripping region (11) is of annular design or of a design similar to a ring, and the plastic attachment (20) is designed as a separate part which is fixed mechanically on the basic body (10) via fastening elements (31, 32, 33) and complements the contour of the cross section of the gripping region to form a substantially closed, circular or oval cross section, **characterized in that** the fastening elements (31, 32, 33) are designed as separate plastic caps which engage around spokes (12), which lead from the gripping region to a hub, and engage in receiving devices (21), which are moulded integrally on the plastic attachment (20), and fix the plastic attachment (20) to the spokes (12) in a positive-locking manner.

2. Steering wheel according to Claim 1, **characterized in that** the plastic attachment (20) has a receiving groove or positive-locking element (24) for the basic body (10).

3. Steering wheel according to Claim 1 or 2, **characterized in that** the plastic attachment (20) is of semi-annular design.

4. Steering wheel according to one of the preceding claims, **characterized in that** the basic body (10) has spokes (12) which connect the outer gripping region (11) to a hub, and the plastic attachment (20) is fixed on the spokes (12).

5. Steering wheel according to one of the preceding claims, **characterized in that** a recess (23) for receiving an installation element (40) is formed in the plastic attachment (20).

6. Steering wheel according to Claim 5, **characterized in that** the basic body (10) and the plastic attachment (20) are covered by a padded and/or decorative covering (50, 60) which is introduced in the recess (23) and is clamped therein by the installation element (40).

7. Steering wheel according to one of the preceding claims, **characterized in that** the basic body (10) is cast or injection-moulded.

8. Steering wheel according to one of the preceding claims, **characterized in that** the basic body (10) is produced from a metallic material, in particular a light metal or a light metal alloy.

## Revendications

1. Volant avec un corps de base (10) de forme stable fixable sur la colonne de direction d'un véhicule automobile, comportant une zone de prise (11) contre laquelle est fixé un épaulement en matière synthétique (20), la zone de prise (11) étant prévue avec une forme annulaire ou analogue à un anneau et l'épaulement en matière synthétique (20) étant réalisé comme une pièce séparée qui est mécaniquement fixée au corps de base (10) par des éléments de fixation (31, 32, 33) et qui complète le contour de la section transversale de la zone de prise pour former une section transversale essentiellement close, circulaire ou ovale, **caractérisé en ce que** les éléments de fixation (31, 32, 33) sont réalisés comme caches en matière synthétique séparés enserrant les rayons (12) allant de la zone de prise à un moyeu, sont engagés dans des dispositifs de réception (21) intégralement moulés contre l'épaulement en matière synthétique (20), et fixent par accouplement mécanique l'épaulement en matière synthétique (20) contre les rayons (12).

2. Volant selon la revendication 1, **caractérisé en ce que** l'épaulement en matière synthétique (20) présente une rainure de réception ou des éléments d'accouplement mécanique (24) pour le corps de base (10).

3. Volant selon la revendication 1 ou la revendication 2, **caractérisé en ce que** l'épaulement en matière synthétique (20) est prévu avec une forme semi-annulaire.

4. Volant selon l'une des revendications précédentes, **caractérisé en ce que** le corps de base (10) comporte des rayons (12) reliant la zone de prise extérieure (11) à un moyeu, et **en ce que** l'épaulement en matière synthétique (20) est fixé contre les rayons (12).

5. Volant selon l'une des revendications précédentes, **caractérisé en ce qu'**un évidement (23) est ménagé dans l'épaulement en matière synthétique (20) pour la réception d'un élément de montage (40).

6. Volant selon la revendication 5, **caractérisé en ce que** le corps de base (10) et l'épaulement en matière synthétique (20) sont entourés d'un revêtement matelassé et/ou décoratif (50, 60), lequel est inséré dans l'évidement (23) et y est pincé par l'élément de montage (40).

7. Volant selon l'une des revendications précédentes, **caractérisé en ce que** le corps de base (10) est moulé ou moulé par injection.

8. Volant selon l'une des revendications précédentes, **caractérisé en ce que** le corps de base (10) est fabriqué dans un matériau métallique, en particulier un métal léger ou un alliage de métaux légers.
